Europäisches Patentamt

European Patent Office

Office européen des brevets

(11) Publication number: **0 140 257**
**B1**

# EUROPEAN PATENT SPECIFICATION

(45) Date of publication of patent specification: **20.05.87**

(51) Int. Cl.⁴: **F 01 D 9/02, F 01 D 5/18**

(21) Application number: **84112328.4**

(22) Date of filing: **12.10.84**

(54) Cooling arrangement for airfoil stator vane trailing edge.

(30) Priority: **28.10.83 US 547292**

(43) Date of publication of application:
**08.05.85 Bulletin 85/19**

(45) Publication of the grant of the patent:
**20.05.87 Bulletin 87/21**

(84) Designated Contracting States:
**BE DE FR GB IT NL**

(56) References cited:
**EP-A-0 032 646**
**EP-A-0 034 961**
**FR-A-2 150 475**
**FR-A-2 519 068**
**GB-A-2 112 468**
**US-A-3 809 494**
**US-A-4 173 120**

(73) Proprietor: **WESTINGHOUSE ELECTRIC CORPORATION**
**Westinghouse Building Gateway Center**
**Pittsburgh Pennsylvania 15222 (US)**

(72) Inventor: **North, William E.**
**2 Settler Road**
**Glen Mills Pennsylvania (US)**
Inventor: **Holden, Paul C.**
**137 Hunt Club Lane**
**Newtown Square Pennsylvania (US)**
Inventor: **Hultgren, Kent G.**
**506 School Lane**
**Swarthmore Pennsylvania (US)**

(74) Representative: **Fleuchaus, Leo, Dipl.-Ing. et al**
**Fleuchaus & Wehser Melchiorstrasse 42**
**D-8000 München 71 (DE)**

Courier Press, Leamington Spa, England.

## Description

This invention relates to a combustion turbine airfoil-shaped stator vane, and in particular to an arrangement to obtain adequate cooling with sufficient structural integrity of the trailing edge part of a thin wall stator vane design.

With maximum operating temperatures of gas turbines increasing with advances in the art, higher cooling requirements for the turbine airfoils have been imposed. This has led to what are called thin wall designs of the stator vanes for example, with cooling being enhanced by internal pin fins which are intended to create turbulence and swirling to promote heat transfer. One of the areas in which adequate cooling is relatively important is in the trailing edge region of the vane which includes the exit slots or openings at the extreme trailing edge, and in which, with a thin wall design, the metal forming the critical throat region for the exit becomes progressively thinner. It is important to avoid any significant deformation of the metal in the trailing edge portion since it defines, with adjacent vanes, the critical throat region of the nozzle. While the internal pin fins which interconnect the two opposite walls of the vane in this region serve to a degree to strengthen the airfoil in this area, they are subject to breaking and the structural integrity of this area of the blade can be increased by adding longitudinal struts or ribs, for example as shown in U.S. Patent 3,809,494. However, these struts tend to defeat to some degree the purpose of the staggered rows of pin fins in certain areas since they tend to smooth the flow as is stated in the noted patent.

An object of this invention is to provide an arrangement of pin fins and longitudinal ribs of a character that structural integrity of the blade is insured in this area while obtaining adequate turbulence of the air to obtain the required heat transfer effectiveness.

The present invention includes a combustion turbine airfoil-shaped stator vane of thin wall design having internal pin fins in staggered rows extending between opposite walls of the vane in the area closely upstream from spanwise openings formed in the trailing edge of the vane and a series of first ribs between said opposite walls of said vane and extending in a flowwise direction in intersecting relation to said staggered rows of pin fins, characterized in that said first ribs include means thereon for inducing turbulent air flow at locations therealong corresponding to the locations of pin fins displaced by the presence of said first ribs.

Conveniently, the stator vane of thin wall design having the internal pin fins in staggered rows extending between the opposite walls of the vane in the area closely upstream from the spanwise openings formed in the trailing edge of the vane, comprises a series of first longitudinal ribs extending in intersecting relation to the staggered rows of pin fins, with the ribs including means thereon for inducing turbulent air flow at locations therealong corresponding to the locations of pin fins displaced by the presence of the ribs.

In the preferred form of the invention the extreme trailing edges of the longitudinal ribs are located to define in part the spanwise openings at the extreme trailing edge with relatively shorter ribs, and the longitudinal ribs are also of an extent that their upstream ends are generally aligned with the first row of pin fins.

The invention will now be described, by way of example, with reference to the accompanying drawings in which:—

Figure 1 is an end view of the shell of a stator vane having the trailing edge portion arrangement;

Figure 2 is a fragmentary section corresponding to one taken along the line II—II of Figure 1; and

Figure 3 is a fragmentary section corresponding to one taken along the line III—III of Figure 2.

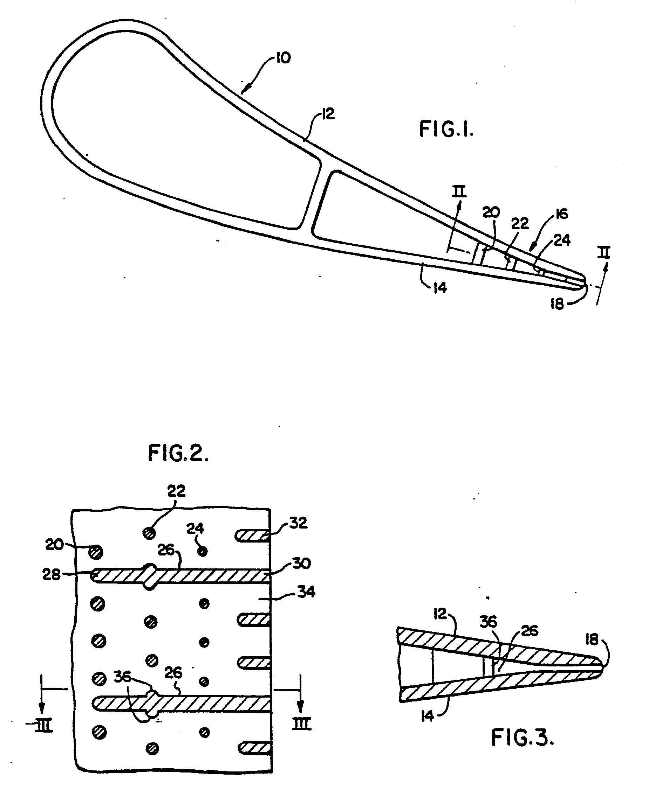

Figure 1 shows a typical end view of a stator vane shell for a gas turbine, such as the first stage thereof, with the inserts for the vane omitted since it is only the trailing edge portion of the vane to which this invention is directed. The shell 10 is of airfoil shape including opposite side walls 12 and 14 which converge toward the trailing edge portion 16 with the metal of the walls becoming progressively thinner in the area which defines the outlet 18 at the extreme trailing edge.

Figure 2 shows three rows 20, 22, and 24, of pin fins with the pin fins in each row being staggered with respect to the pin fins in each adjacent row. Preferably, the pin fins are of progressively decreasing diameter in the direction of airflow. The pin fins derive their heat transfer effectiveness from the turbulence of the wakes spreading downstream from the pins. While the pin fins are integrally cast with the shell so that they are integral with the opposing walls, it is our view that there is a possibility of inadequate structural integrity provided by the pin fins alone. Therefore, in accordance with our invention longitudinal ribs 26 are provided to enhance the structural integrity of the trailing edge portion of the vane. As shown in Figure 2, for example, these ribs are provided at selected intervals and intersect the rows of pin fins. In the currently preferred form, the upstream ends 28 of the ribs are in generally aligned relation with the upstream row 20 of pin fins. The ribs 26 extend downstream to the extreme trailing edge where their downstream ends 30 function with adjacent short ribs 32 to define relatively uniformly spaced spanwise openings 34 which function as flow control exit air slots.

While the problem of deformation is solved by the ribs providing the stiffness needed for geometrical control of the airfoil, the provision of ribs having smooth surfaces would tend to defeat the purpose of the pin fins because of the fact that some of the turbulence-generating pins are displaced by the ribs. In the illustration, every third pin in the intermediate row of pin fins 22 must be omitted because of the presence of the ribs 26. Therefore, in accordance with the invention, the ribs 26 are not smooth surfaced, but rather are provided with means to induce turbulence at any location where the pins are displaced. These means, as illustrated in Figure 2, being oppositely projecting protuberances 36 at those locations where the pins have been displaced.

**Claims**

1. A combustion turbine airfoil-shaped stator vane of thin wall design having internal pin fins in staggered rows (20, 22, 24) extending between opposite walls (12, 14) of the vane in the area closely upstream from spanwise openings (34) formed in the trailing edge (16) of the vane and a series of first ribs (26) between said opposite walls (12, 14) of said vane and extending in a flowwise direction in intersecting relation to said staggered rows (20, 22, 24) of pin fins, characterized in that said first ribs include means (36) thereon for inducing turbulent air flow at locations therealong corresponding to the locations of pin fins displaced by the presence of said first ribs (26).

2. A stator vane as claimed in claim 1 characterized in that said spanwise openings (34) are relatively uniformly spaced and are formed in part between relatively short ribs (32) downstream from said pin fins, and said first ribs (26) are located in an array in which said first ribs (26) coincide in location in a radial direction with some of said short ribs (32) so that the downstream end portions of said first ribs (26) function with adjacent short ribs to define said uniformly spaced spanwise openings (34).

3. A stator vane as claimed in claim 1 or 2 characterized in that the upstream ends of said first ribs (26) are substantially aligned with the upstream row (20) of said pin fins.

**Patentansprüche**

1. Leitschaufel mit dünnen Wänden und in Form einer Tragfläche für eine Verbrennungsturbine, wobei die Leitschaufel interne Nadelrippen in versetzten Reihen (20, 22, 24) aufweist, die zwischen gegenüberliegenden Wänden (12, 14) der Leitschaufel in einem Gebiet verlaufen, das stromaufwärts in der Nähe von Öffnungen (34) liegt, die sich über die Spannweite erstrecken und in der Hinterkante der Leitschaufel ausgebildet sind, und ferner einer Reihe von ersten Rippen (26) zwischen den gegenüberliegenden Wänden (12, 14) der Leitschaufel aufweisen, die in Strömungsrichung durch die versetzten Reihen (20, 22, 24) von Nadelrippen verlaufen, dadurch gekennzeichnet, daß die ersten Rippen Vorrichtungen (36) enthalten, um eine turbulente Luftströmung längs Positionen auszulösen, die den Positionen der Nadelrippen entsprechen, die durch das Vorhandensein der ersten Rippen (26) verdrängt werden.

2. Leitschaufel nach Anspruch 1, dadurch gekennzeichnet, daß die über die Spannweite sich erstreckenden Öffnungen (34) relativ gleichmäßig verteilt, zwischen relativ kurzen Rippen (32) stromabwärts zu den Nadelrippen ausgebildet sind und daß die ersten Rippen (26) in einer Anordnung liegen, in der diese ersten Rippen (26) positionsmäßig in radialer Richtung mit einigen der kurzen Rippen (32) zusammenfallen, so die stromabwärts liegenden Endabschnitte der ersten Rippen (26) mit benachbarten kurzen Rippen die gleichförmig über die Spannweite verteilten Öffnungen (34) definieren.

3. Leitschaufel nach Anspruch 1 oder 2, dadurch gekennzeichnet, daß die stromaufwärts gelegenen Enden der ersten Rippen (26) im wesentlichen auf die stromaufwärts gelegene Reihe (20) der Nadelrippen ausgerichtet sind.

**Revendications**

1. Aube profilée à paroi mince de stator de turbine à gaz comportant des broches internes formant ailettes réparties en des rangées décalées (20, 22, 24) s'étendant entre les parois opposées (12, 14) de l'aube dans la zone directement en amont des ouvertures (34) tranversales réalisées dans le bord de fuite (16) de l'aube, ainsi qu'une série de premières nervures (26) entre les parois opposées (12, 14) de l'aube et s'étendant dans la direction de l'écoulement de manière à couper les rangées décalées (20, 22, 24) de broches, caractérisée en ce que ces premières nervures comportent des moyens (36) pour induire un écoulement turbulent de l'air aux endroits le long des nervures qui correspondant au déplacement des broches par la présence des premières nervures (26).

2. Aube de stator selon la revendication 1, caractérisée en ce que les ouvertures transversales (34) sont espacées de manière relativement uniforme et sont réalisées en partie entre les nervures relativement courtes (32) en aval des broches et les premières nervures (26) sont prévues suivant une répartition dans laquelle les première nervures (26) correspondent dans la directions radiale à certaines des courtes nervures (32), si bien que les extrémités aval des premières nervures (26) coopèrant avec les courtes nervures adjacentes pour former des ouvertures transversales (34) réparties uniformément.

3. Aube de stator selon la revendication 1 ou 2, caractérisée en ce que les extrémités amont des premières nervures (26) sont pratiquement alignées sur la rangée aval (20) des broches formant des ailettes.

0 140 257

FIG.I.

FIG.2.

FIG.3.

1